Europäisches Patentamt

European Patent Office

Office européen des brevets

(11) Veröffentlichungsnummer: **0 254 893**
**A2**

# (12) EUROPÄISCHE PATENTANMELDUNG

(21) Anmeldenummer: 87109439.7

(22) Anmeldetag: 01.07.87

(51) Int. Cl.⁴: **G03B 27/62**

(30) Priorität: **23.07.86 DE 3624873**

(43) Veröffentlichungstag der Anmeldung:
**03.02.88 Patentblatt 88/05**

(84) Benannte Vertragsstaaten:
**CH DE FR GB IT LI**

(71) Anmelder: **Kempf, Ulrich**
**Augusta Strasse 8**
**D-2057 Wentorf(DE)**

(72) Erfinder: **Kempf, Ulrich**
**Augusta Strasse 8**
**D-2057 Wentorf(DE)**

(74) Vertreter: **Dipl.-Ing. H. Hauck Dipl.-Phys. W.**
**Schmitz Dipl.-Ing. E. Graalfs Dipl.-Ing. W.**
**Wehnert Dr.-Ing. W. Döring**
**Neuer Wall 41**
**D-2000 Hamburg 36(DE)**

(54) **Verfahren zur Herstellung eines farbigen strukturierten Unter- oder Hintergrundes beim Fotografieren von Gegenständen.**

(57) Verfahren zur Herstellung eines farbigen, strukturierten Hinter-oder Untergrundes beim Fotografieren von Gegenständen unter Verwendung einer farbigen Untergrundfläche, wobei eine dünne flexible glasklare Kunststofffolie, die mit unterschiedlichen farbigen oder monochromen Motiven oder Strukturen versehen, vorzugsweise bedruckt ist, gegen die Untergrundfläche gelegt wird.

FIG.1

EP 0 254 893 A2

## Verfahren zur Herstellung eines farbigen strukturierten Unter-oder Hintergrundes beim Fotografieren von Gegenständen

In der kommerziellen Fotografie ist bekannt, einen Hinter-oder Untergrund mit Hilfe eines kartonartigen Papiers oder einer farbigen Kunststoffolie herzustellen. Das Papier oder die Kunststoffolie werden auf Rollen gewickelt, wobei für die verschiedenen Farben und Farbnuancen eine entsprechende Anzahl von Rollen vorzuhalten ist. Das kartonartige Papier ist in der Masse gefärbt oder auch in Irisdruck bedruckt. Herkömmliche Bahnen haben eine Breite bis zu 2,75 m und eine Länge von 11 m.

In vielen Fällen ist eine zusätzliche Variierung oder Strukturierung der farbigen Hintergrundfläche gewünscht. Aus Gründen der Lagerhaltungskosten ist es nicht möglich, Papierbahnen oder Kunststoffolien zusätzlich mit unterschiedlichen Motiven oder Strukturen zu bedrucken. Es ist daher bekannt, beim Fotografieren von Gegenständen (der Begriff "Gegenstände" soll alle körperlichen Gebilde umfassen, also auch Pflanzen oder Lebewesen) gegen die Hinter-oder Untergrundfläche eine Glasscheibe zu halten, die mit einem gewünschten Muster versehen ist. Eine entsprechende Struktur kann zum Beispiel durch Aufmalen oder Aufkleben von Streifen erzielt werden. Ein derartiges Verfahren ist jedoch außerordentlich zeitaufwendig. Außerdem können die Glasplatten nur eine Mindestdicke aufweisen, so daß die Gefahr von Doppelschattenbildungen besteht.

Es ist ferner bekannt, sogenannte Vordergrundmaskierungen zur Erzielung einer Untergrundvariation zu verwenden oder diese mit Hilfe der Computergrafik zu erzeugen. Auch diese Verfahren sind für die Alltagspraxis in der kommerziellen Fotografie zu aufwendig.

Der Erfindung liegt die Aufgabe zugrunde, ein Verfahren zur Herstellung eines farbigen strukturierten Untergrundes beim Fotografieren von Gegenständen anzugeben, mit dem mit einfachen und zeitsparenden Mitteln eine gewünschte Hintergrundstruktur oder Veränderung des Hinter grunds bzw. Untergrunds erzielt werden kann.

Diese Aufgabe wird erfindungsgemäß dadurch gelöst, daß eine dünne, flexible, glasklare Kunststoffolie, die mit unterschiedlichen farbigen oder monochromen Motiven oder Strukturen versehen, vorzugsweise bedruckt ist, gegen die Hintergrundfläche gelegt wird.

Die Erfindung geht von der Erkenntnis aus, daß eine begrenzte Anzahl von Strukturen und Motiven die meisten Bedürfnisse abdeckt, einen gegebenen farbigen Unter-bzw. Hintergrund zu verändern oder anzureichern. So kann die glasklare Kunststoffolie mit Strichmustern, Punkten oder anderen grafischen Motiven bedruckt werden, so daß die entsprechende farbige Untergrundfläche strukturiert wird. Es ist auch möglich, flächige Strukturen aufzubringen. Die Motive und/oder Strukturen können einfarbig oder mehrfarbig sein.

Erfindungswesentlich ist, daß die auf die Untergrundfläche aufgelegte Kunststoffolie dünn und flexibel ist, damit sie sich glatt an die Untergrundfläche anlegt. Aufgrund der glatten Anlage und der geringen Dicke werden Doppelschattenbildungen vermieden. Vorzugsweise hat die Kunststoffolie eine Dicke von 0,1 bis 0,3 mm. Sie besteht aus bekannten Kunststoffmaterialien, wie Extrudaten aus Acetat, Polypropylen oder Polyvinylchlorid.

Die erfindungsgemäße Kunststoffolie kann ebenso wie die bekannten Papierbahnen zur Erzeugung eines farbigen Untergrundes in Bahnenform auf Vorrat gehalten werden. Im Anwendungsfall - schneidet der Fotograf eine gewünschte Länge von der Bahn ab, um sie in der oben beschriebenen Art und Weise einzusetzen.

Bei der Erfindung wird vorzugsweise die glasklare strukturierte oder anderweitig bedruckte Kunststofffolie mit konventionellen Papier-oder Kunststoffbahnen zur Bildung eines Farbenuntergrunds kombiniert. Es versteht sich jedoch, daß sie auch für andere farbige Untergrundflächen eingesetzt werden kann.

Die Erfindung wird nachfolgend von Zeichnungen kurz erläutert.

Fig. 1 zeigt eine Draufsicht auf einen erfindungsgemäß gebildeten Hintergrund.

Fig. 2 zeigt einen Schnitt durch den Hintergrund nach Fig. 1 mit einem davor angeordneten Gegenstand.

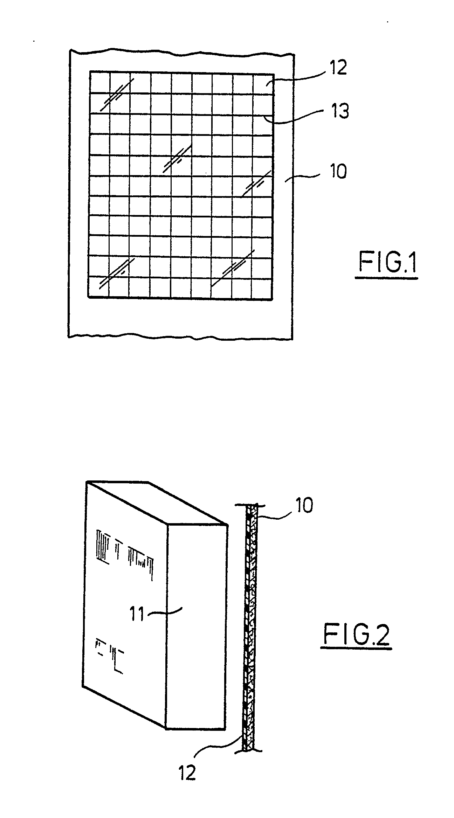

Eine kartonartige Papierbahn 10 ist mit einer beliebigen Farbe bedruckt. Auf einer Anzahl von Papierrollen für die unterschiedlichen Farben und Farbnuancen, die normalerweise bei einem Händler auf Lager sind, wählt der Fotograf die gewünschte Farbe und die gewünschte Menge. Die Papierbahn 10 bildet einen farbigen Untergrund für einen zu fotografierenden Gegenstand 11 (nur in Fig. 2 dargestellt), der zum Beispiel eine Zigarettenschachtel sein kann. Gegen die Papierbahn 10 wird eine Kunststoffolie 12 glatt angelegt. Die Kunststoffolie 12 ist aus glasklarem Kunststoffmaterial, relativ dünn und flexibel. Ihre Dicke beträgt vorzugsweise zwischen 0,1 und 0,3 mm. Die Kunststoffolie 12 ist im gezeigten Fall mit einem Rastermuster 13 bedruckt. Papierbahn 10 und Folie 12 bilden mithin ein Raster, dessen Karos die Farbe der Papierbahn 10 aufweisen. Anstelle eines Rasters 13 können andere beliebige grafische Strukturen und andere Motive einfarbig oder mehrfarbig eingesetzt werden. Die Folie 12 kann ebenfalls in Bahnenform vorrätig gehalten werden.

## Ansprüche

1. Verfahren zur Herstellung eines farbigen, strukturierten Hinter-oder Untergrundes beim Fotografieren von Gegenständen unter Verwendung einer farbigen Untergrundfläche, dadurch gekennzeichnet, daß eine dünne flexible glasklare Kunststoffolie, die mit unterschiedlichen farbigen oder monochromen Motiven oder Strukturen versehen, vorzugsweise bedruckt ist, gegen die Untergrundfläche gelegt wird.

2. Verfahren nach Anspruch 1, dadurch gekennzeichnet, daß die Kunststoffolie 0,1 bis 0,5, vorzugsweise bis 0,3 mm dick ist.

3. Verfahren nach Anspruch 1 oder 2, dadurch gekennzeichnet, daß die Kunststoffolie aus Acetat, Polypropylen oder Polyvinylchlorid besteht.

FIG.1

FIG.2